# EUROPEAN PATENT APPLICATION

(11) **EP 1 143 771 A1**
(43) Date of publication of application: **10.10.2001**
(21) Application number: 00201275.5
(22) Date of filing: 07.04.2000
(51) Int. Cl.: H05B 6/80, H05B 6/64, A47J 36/02

(54) **Device for reheating by microwaves**

(71) Applicant: CSM Nederland B.V., 1112 XE Diemen (NL)
(72) Inventor: The designation of the inventor has not yet been filed
(74) Representative: Jorritsma, Ruurd

(57) **Abstract**

The invention concerns a novel device for reheating baked microwaveable food products and comprises
(i) an external container (1) composed of a lower part (2) and a removable lid (3) fitting to the lower part (2), all being made of a heat resistant mineral composition that is transparent for microwaves.
(ii) a sheet (6 ) susceptible to microwave heating, which sheet (6) is positioned above the bottom (8) of container (1) and spaced from the bottom (8) by supports (9) creating a heat insulating interspace (4a) between the bottom (8) and the sheet (6)
(iii)in the top of the device just below lid (3) but separated therefrom a sheet (11) susceptible to microwave heating.

## Description

Nowadays food products, including baked bakery products become more and more popular as components of the daily meal. These products are made in a form that makes them readily available for the consumer and all the consumer needs to do is to reheat the food product prior to consumption. This reheating should be achievable in the shortest time possible. For this microwave techniques are available these days, however microwave reheating is not always so easy and easily results in products that are overheated, in particular locally overheated so that local burned spots are present in or on the food products after the reheating. Also the crispness of the products obtained by these known techniques is not always the crispness that is desired. Therefore these products are not appreciated by the consumers and consequently we have studied whether we could find a solution for this so that we can make reheated food products in a short time using microwave energy but which products do not display the disadvantages of the products made by the known techniques. Moreover we studied whether we could make a device that is reusable and that does not need to be discarded after use as is the case for known devices (e.g. such as known from US 4 190 757). Moreover our device should be removable from the oven without giving problems because of the high temperature of the device (about 280oC) leaving the MW-oven. We also studied whether we could improve the heating efficiency of the device and of the microwave heating.

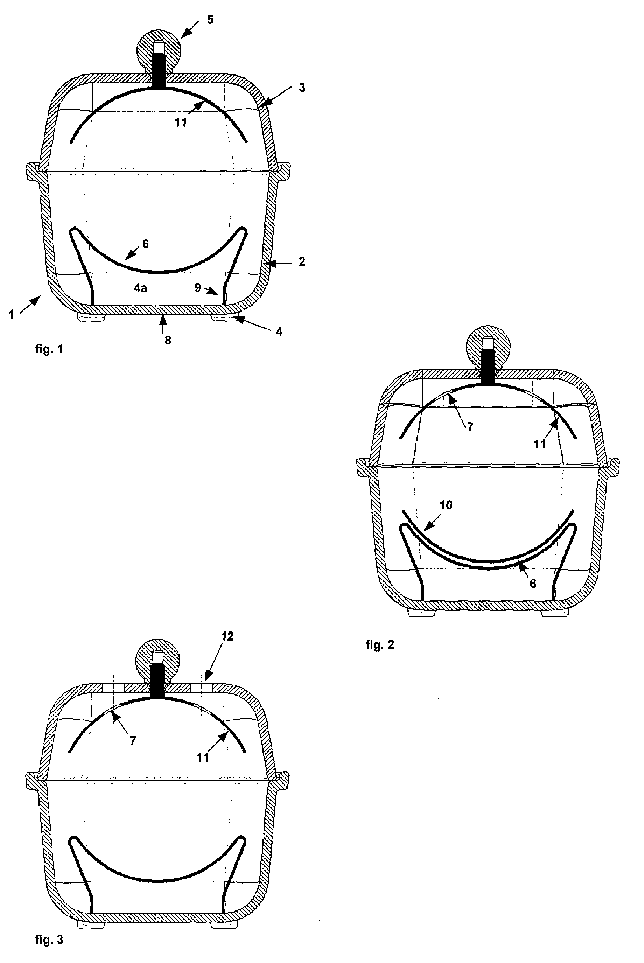

The devices according to the invention are represented schematically in fig 1 - 3 to which we will refer further in this patent application. However this does not mean that our invention is limited to the devices represented in these figures 1 - 3, other devices are also possible within the broad scope of our invention that are not represented in these fig 1 -3.

The above study has resulted in our new invention and therefore this invention concerns in the first instance a device for microwave reheating of baked bakery products comprising;
(i) an external container (1) composed of a lower part (2) and a removable lid (3) fitting to the lower part (2), all being made of a heat resistant mineral composition that is transparent for microwaves
(ii) the lower part (2) optionally being provided with support means (4) and
(iii)optionally the lid ( 3) being provided with heat insulated grips ( 5) for removal of the hot lid (3) from the lower part (2) of the container (1)
(iv) a sheet (6 ) susceptible to microwave heating ,which sheet (6) is positioned above the bottom (8) of container (1) and spaced from the bottom (8) by supports (9) creating a heat insulating interspace (4a) between the bottom (8) and the sheet (6)
(v) optionally a container (10) for the food product to be heated by microwave heating and made from a material not transparent for microwaves, which container is in direct heat exchange contact with sheet (6) and
(vi) in the top of the device just below lid (3) but separated therefrom a sheet (11) susceptible to microwave heating.

The construction of the external container with a lower part (2) and a removable lid (3) makes it easy to put the food product that must be reheated in the container and to remove it therefrom after reheating is completed. The fact that the container is made from a material that is transparent to microwaves makes it possible that the microwaves can penetrate the container and can be used for the reheating in the way as described below.
The support means (4), although not imperative have two advantages i.e. 1. the bottom of the container (1) which may be very hot after reheating and which may burn any support (e.g. a table) it will placed upon after removal from the oven will not contact this support so that this support will not be burned and 2. the microwaves entering the container can be used in a more efficient way to heat the susceptor material present in the container because now also microwaves coming from below the bottom (8) or reflected within the MW-oven can be used herefore.
The heat insulated grips (5) makes it easier to remove the hot lid (3) after reheating is finished, however we are not limited to devices with such a grip; a device without such a grip also will result in reheated baked bakery products of very good quality.
The position of sheet (6), which is a sheet made of or containing a material susceptible to microwave heating is crucial for the heating efficiency and the quality of the products resulting therefrom. This sheet (3) must be positioned above bottom (8) and spaced therefrom by support means in order to create an interspace (4a) between bottom and susceptor (6). This interspace will form a heat barrier between the bottom (8) and the susceptor (6) and therefore will help to prevent that the bottom will be overheated.
Simultaneously this interspace will make it possible that the microwaves penetrating the oven will be used in an efficient way.
The presence of a removable container (10) for the food products that must be reheated is not imperative because these food products can also immediately be put on the susceptor sheet (6). However, the container (10) is useful to avoid that the whole device has to be cleaned after every time it is used (with the container 10 only this container can be cleaned).
Essential for obtaining the desired product quality after reheating is that in the top of the device, just below lid (3) a second susceptor material (11) is present , here in the form of a sheet. This sheet (11) should not be in direct contact with lid (3) as this will avoid that lid (3) will become very hot i.e. will reach temperatures of above 300oC.

The material from which the susceptors (6) and (11) can be made can be selected from any material known to be susceptible to microwave heating with the prerequisite that the materials are food allowable. A convenient material is the product resulting from the heating of a metal powder and a mineral clay (as a support herefore and providing physical strength after baking of the clay) and wherein this metal powder is incorporated. Aluminium powder is preferably used herefore.

The susceptor material sheets (6) respectively (11) are according to another embodiment of our invention suitably made from a metal sheet provided with a coating of a material susceptible to microwave heating at that surface of the sheets (6) respectively (11) facing the container (1) respectively the lid (3), the coating in particular being a ferrite containing material. The heat developed by the susceptors (6) and (11) is transferred to the metal sheet by conduction and the heat produced by these sheets is used to reheat the food products.

Beneficial results are obtained when sheet (6) and/or sheet (11) is/are provided at the side facing the container (1) respectively the lid (3) with a layer of material that forms a heat barrier, this material not being susceptible to microwave heating comprises in particular foamed glass. However other barrier materials can be used as well. These barrier materials give a more efficient use of the heat produced because less of the heat will be lost from the system.

It was further found that a very efficient reheating could be achieved when, in case the container (10) is present, the sheets (6) and/or (11) is/are made of a metal and is/are provided with holes (7) forming a pattern for a faster microwave heating of the food product in container (10). The holes can help to focus the microwave energy in those parts of the food product to be reheated where this is desired.

In the instance wherein container (10) is absent we found that the best quality reheated products could be obtained if sheets (6) and/or (11) has/have a shape following the contour of the product to be reheated.
In this way a more homogeneous heating of the product to be reheated is possible.

By using a material that can reflect infrared waves at either the innerside of lid (3) or at the innerside of bottom (8) it can be prevented that heat losses occur while simultaneously the temperature of the container and/or the lid do not become to high. This results in a better quality of the products. Such materials are well known and any of these materials that is a food allowable material can be used in our device.

A further improvement can be achieved by using a black coating on the side of sheet (11) or of sheet (6) facing the product in the device, this coating will improve the radiation efficiency of these sheets and results in a better crispness after reheating.

During the reheating water vapour will be formed and it is suitable to remove this water vapour in a controlled way. This can be achieved by providing holes (12) in the container (1) in particular in its lid (3).

The materials from which the device of the invention is made are such that the device is reusable for a great number of times. This has ecological and economical advantages.

## Claims

1. Device for microwave reheating of baked bakery products comprising;
(i) an external container (1) composed of a lower part (2) and a removable lid (3) fitting to the lower part (2), all being made of a heat resistant mineral composition that is transparent for microwaves
(ii) the lower part (2) optionally being provided with support means (4) and
(iii)optionally the lid ( 3) being provided with heat insulated grips ( 5) for removal of the hot lid (3) from the lower part (2) of the container (1)
(iv) a sheet (6 ) susceptible to microwave heating ,which sheet (6) is positioned above the bottom (8) of container (1) and spaced from the bottom (8) by supports (9) creating a heat insulating interspace (4a) between the bottom (8) and the sheet (6)
(v) optionally a container (10) for the food product to be heated by microwave heating and made from a material not transparent for microwaves, which container is in direct heat exchange contact with sheet (6)
(vi) in the top of the device just below lid (3) but separated therefrom a sheet (11) susceptible to microwave heating.

2. Device according to claim 1, wherein the sheets (6) respectively (11) is/are made of a material that in combination with a mineral composition upon heating gives a material susceptible to microwave heating, in particular a metal powder, such as aluminium, in combination with a mineral clay.

3. Device according to claim 1 wherein the sheets (6) respectively (11) is/are made from a metal sheet provided with a coating of a material susceptible to microwave heating at that surface of the sheets (6) respectively (11) facing the container (1) respectively the lid (3), the coating in particular being a ferrite containing material.

4. Device according to claims 2 or 3, wherein sheet (6) and/or sheet (11) is/are provided at the side facing the container (1) respectively the lid (3) with a layer of material that forms a heat barrier, the material in particular comprising foamed glass.

5. Device according to claim 1, wherein the container (10) is present, while the sheets (6) and/or (11) is/are made of a metal and is/are provided with holes (7) forming a pattern for a faster microwave heating of the food product in container (10).

6. Device according to claim 1 wherein the container (10) is absent while the sheet (6) has a shape following the contour of the product to be reheated in the device.

7. Device according to claim 1 , wherein the lid (3) is provided at its innerside with a material reflecting IR.

8. Device according to claim 1 ,wherein sheet (11) at the side facing the product in the device is provided with a black coating to improve the radiation efficiency of sheet (11) and to increase the crispness of the product after microwave reheating.

9. Device according to claim 1 wherein the bottom (8) of container (1) is provided at its innerside with a coating of a material reflecting IR .

10. Device according to claim 1 wherein the external container (1), in particular its lid (3) is provided with holes (12) to remove the water vapour formed during the reheating of the baked bakery products.

11. Device according to any of claims 1 to 10, wherein the materials from which the device is made are chosen such that the device is reusable.
